# EUROPÄISCHE PATENTANMELDUNG

(11) **EP 0 640 657 A2**
(43) Veröffentlichungstag der Anmeldung: **01.03.1995**
(21) Anmeldenummer: 94112899.3
(22) Anmeldetag: 18.08.1994
(51) Int. Cl.: C08L 83/04, C08K 5/54

(54) **Einkomponenten Polysiloxanmassen**

(30) Priorität: 31.08.1993 DE 4329263
(71) Anmelder: BAYER AG, 51368 Leverkusen (DE)
(72) Erfinder: Friebe, Robert, Dr., D-51373 Leverkusen (DE); Weber, Wilhelm, Dr., D-51373 Leverkusen (DE); Sockel, Karl-Heinz, D-51373 Leverkusen (DE)

(57) **Zusammenfassung**

Verbindungen der allgemeinen Formel

(R³O)₃₋ₙR⁴ₙSi-(CH₂)_{z}-X

wobei
R³, R⁴gleiche oder verschiedene lineare oder verzweigte C₁-C₂₀-Alkylreste oder Alkoxyalkylreste bezeichnet,
Xein Halogenatom,
einen Aminoarylrest bezeichnet, wobei der aromatische Rest gegebenenfalls an einem oder mehreren Kohlenstoffatomen an beliebiger Position C₁-C₂₀-Alkylreste oder Alkoxyalkylreste, Halogenatome oder andere funktionelle Gruppen tragen kann,
oder eine Hydroxygruppe oder eine C₁-C₂₀-Alkoxyalkylgruppe, die an einem oder mehreren Kohlenstoffatomen an beliebiger Position durch eine oder mehrere Hydroxygruppen substituiert ist,
n =0, 1 oder 2, und
z =eine Zahl zwischen 1 und 20 ist, sind
als Haftvermittler in 1K-RTV-Massen, die Titanverbindungn als Kondensationskatalysatoren aufweisen, geeignet.

## Beschreibung

Die Erfindung betrifft 1-Komponenten-Siliconsysteme - im folgenden 1K-RTV-Massen genannt - die unter Ausschluß von Feuchtigkeit lagerfähig sind und unter dem Einfluß von Wasser oder Wasserdampf bzw. Feuchtigkeit bei Raumtemperatur aushärten und dabei Alkohole als Spaltprodukte freisetzen.

Solche Massen können aus Polyorganosiloxanen mit reaktiven Endgruppen, Silanvernetzern und gegebenenfalls Füllstoffen unter Verwendung von Kondensationskatalysatoren hergestellt werden. Nach dem Stand der Technik eigenen sich als Katalysatoren organische Titanverbindungen. Polysiloxanmassen, die als Kondensationskatalysatoren Titanverbindungen enthalten, sind bekannt. Als Auswahl seien hier nur einige wenige Beispiele genannt, die unter Verwendung solcher Titankatalysatoren und Alkoxysilanvernetzern der allgemeinen Formel (RSi (OR')₃ hergestellt werden: US-A-3 334 067, US-A-3 294 739, DE-A 3 125 881, DE-A 3 512 337, US-A-3 499 859 und US-A-4 438 039.

Eine Voraussetzung für den erfolgreichen Einsatz dieser 1K-RTV-Massen z.B. als Dichtungsmassen ist eine gute und dauerhafte Haftung zum Untergrund. Wünschenswert ist dabei ein möglichst breites Haftspektrum der Massen, was einen weiten Anwendungsbereich eröffnet.

Zur Verbesserung der Hafteigenschaften vom 1K-RTV-Massen werden den Pasten üblicherweise Haftvermittler zugesetzt, bei denen es sich vorzugsweise um organofunktionelle Silane des Typs (R'O)₃₋ₙR''ₙSi-X handelt, wobei X eine beliebige organische Gruppe darstellt, die in einer beliebigen Position durch eine funktionelle Gruppe substituiert ist wie z.B. eine Amino-, Cyano-, Mercapto-, Glycidoxy- oder Methacryloxy-Gruppe.

Es existieren zahlreiche Patentpublikationen, die den Einsatz solcher Verbindungen in alkoxyhärtenden titankatalysierten Polysiloxanmassen beschreiben. So beschreibt die DOS 2 063 630 Carboxygruppen-haltige Haftmittel wie z.B. die Verbindung (CH₃O)₃Si(CH₂)₃S(CH₂)₂COOH. In der US-A-4 460 739 wird z.B. Maleamidylpropyltriethoxysilan und in der GB 2 079 745A 1,3-Bis-trimethoxysilylpropylisocyanurat beschrieben. Die GB 2 137 217A beschreibt u.a. Acyloxy-, Acryloxy-, Cyano-, Isocyanato-, Amino- und Epoxy-funktionelle Alkoxysilane als Haftvermittler. Mercaptosilane werden in der EP-A 345 645 und Epoxyalkoxysilane in der EP-A 175 134 beschrieben. Auch Kombinationen aus funktionellen Silanen wie Epoxy- und Aminotrialkoxysilanen (EP-A 221 644) werden beschrieben.

Diese bekannten Haftmittel weisen jedoch in der Praxis eine Reihe von Nachteilen auf. Die haftvermittelnde Wirkung der Silane beschränkt sich teilweise nur auf einige wenige Substrate, auch beoabachtet man oft nach Lagerung ausvulkanisierter Prüfkörper in Wasser einen Verlust der Haftung. Weiterhin treten insbesondere in titankatalysierten 1K-RTV-Massen Vernetzungsstörungen und Verfärbungserscheinungen auf, die vermutlich durch Reaktionen zwischen den Titankatalysatoren und den Haftvermittlern hervorgerufen werden. Oft beobachtet man auch eine unzureichende Lagerstabilität der unvulkanisierten Massen.

Es bestand daher die Aufgabe, geeignete Haftmittel zu finden, die die o.g. Nachteile vermeiden und gute Haftung der 1K-RTV-Massen bewirken.

Unerwarteterweise wurde gefunden, daß besonders geeignete Haftmittel für die erfindungsgemäßen Polysiloxanmassen organofunktionelle Alkoxysilane der allgemeinen Formel (R'O)₃₋ₙR''ₙSi-(CH₂)_{z}-X sind, in denen die funktionelle Gruppe X ein Halogenatom, insbesondere Chlor, eine Hydroxygruppe oder eine Aminoarylgruppe, insbesondere Aminophenyl-, darstellt. Beispiele für solche Verbindungen sind 3-Chlorpropyltriethoxysilan, 3-Chlorpropyldimethoxymethylsilan, 3-Hydroxypropyltriethoxysilan und 3-(N-Phenylamino)-propyltriethoxysilan.

Die unter Zuhilfenahme der erfindungsgemäßen Haftvermittler gefertigten 1K-RTV-Massen weisen ein überraschend breites Haftspektrum, gute mechanische Eigenschaften der Vulkanisate, rasche und von Störungen freie Durchhärtung, keinerlei Verfärbungsneigungen sowie sehr gute Lagerstabilitäten auf.

Gegenstand der vorliegenden Erfindung sind demgemäß bei Umgebungstemperatur unter Einfluß von Wasser bzw. Feuchtigkeit härtende Polysiloxanmassen, die erhältlich sind durch Vermischen von
a) 100 Gew.-Teilen Polyorganosiloxanen mit reaktiven Endgruppen,
b) 0 bis 50 Gew.-Teilen Polyorganosiloxanen mit nicht reaktiven Endgruppen,
c) 5 bis 20 Gew.-Teilen Alkoxysilanvernetzern,
d) 0,01 bis 2 Gew.-Teilen organischen Titanverbindungen als Kondensationskatalysatoren,
e) 10 bis 120 Gew.-Teilen Füllstoffen,
f) erfindungsgemäßen Haftvermittlern und
g) gegebenenfalls weiteren Zusatz- und Hilfsstoffen wie z.B. Stabilisatoren, Farbstoffen und Fungiziden in Mengen von bis zu 5 Gew.-Teilen.

Als Polydiorganosiloxane mit reaktiven Endgruppen a) können Polydimethylsiloxane eingesetzt werden, wobei gegebenenfalls die Methylgruppen teilweise durch Vinyl-, Phenyl-, C₂-C₈-Alkyl- oder Haloalkylgruppen ersetzt sein können. Die Polydimethylsiloxane sollen im wesentlichen linear sein, geringe Anteile an verzweigend wirkenden Organosiloxyeinheiten können jedoch anwesend sein. Die Viskosität der Polymere liegt vorzugsweise zwischen 1,0 und 1000 Pa.s, vorzugsweise unterhalb von 100 Pa.s. Als reaktive Endgruppen kommen OH-Gruppen oder Trialkoxysiloxy- oder Dialkoxyalkylsiloxy-Gruppen in Frage, wobei die Alkylgruppen gegebenenfalls an einer beliebigen Position Halogenatome, Aminoaryl-, -alkyl-, Hydroxygruppen oder andere funktionelle Gruppen tragen können.

Bevorzugt sind im letzteren Fall Diethoxymethylsiloxy-, Diethoxyvinylsiloxy-, Dimethoxymethylsiloxy-, Dimethoxy-3-chlorpropylsiloxy- (-OSi-(OCH₃)₂[(CH₂)₃Cl]) oder Dimethoxy-3(N-phenylaminopropyl)siloxy- (-OSi(OCH₃)₂[(CH₂)₃NHPh]) Gruppen.

Als Silanvernetzer c) sind Alkoxysilane geeignet. Bevorzugte Alkoxysilane sind Tetraethoxysilan, Methyltrimethoxysilan, Methyltriethoxysilan oder Vinyltriethoxysilan.

Als organische Titankatalysatoren d) können alle üblichen zum Teil aus der zitierten Literatur bekannten Verbindungen eingesetzt werden wie Tetraalkyltitanate, z.B. Ti(OC₂H₅)₄, Ti[OCH(CH₃)₂]₄, Ti[O(n-C₄H₉)]₄, Ti[OCH₂CH(CH₃)₂]₄, Ti[OCH₂CH(C₂H₅)-C₄H₉]₄ und Komplexe des Titans mit verschiedenen Chelatbildnern wie z.B. den β-Dicarbonylverbindungen wie Acetessigsäureethylester oder Acetylaceton: Diisobutyldiacetessigsäureethylestertitanat, Diisopropyltitandiacetylacetotitanat, Propan-1,2-dioxodiacetessigsäureethylestertitanat, Propan-1,3-dioxodiacetessigsäureethylestertitanat, Propan-1,2-dioxo-acetessigsäureethylester-citronensäure-triethylestertitanat. Besonders geeignet sind Tetrasisobutyltitanat, Propan-1,2-dioxodiacetessigsäureethylestertitanat, Propan-1,2-dioxoacetessigsaureethylester-citronensauretriethyl-estertitanat und Diisobutylbisacetessigsäureethylestertitanat.

Geeignete Füllstoffe e) können verstärkende Füller wie pyrogene oder gefällte Kieselsäuren und Ruß bzw. nicht oder schwach verstärkende mineralische Materialien carbonatischer, silicatischer oder oxidischer Zusammensetzung eingesetzt werden. Die Füllstoffoberflächen können vorbehandelt sein. Besonders bevorzugt sind silanisierte pyrogene Kieselsäuren und mit Stearinsäure beschichtete, gemahlene Naturkreide oder gefällte Kreiden.

Die erfindungsgemäßen Haftvermittler f) weisen folgende allgemeine Struktur auf:

(R'O)₃₋ₙR''ₙSi-(CH₂)_{z}-X

wobei
- R', R'': gleiche oder verschiedene lineare oder verzweigte C₁-C₂₀-Alkylreste oder Alkoxyalkylreste bezeichnet,
- X: ein Halogenatom, oder
einen Aminoarylrest, wobei der aromatische Rest gegebenenfalls an einem oder mehreren Kohlenstoffatomen an beliebiger Position C₁-C₂₀-Alkylreste oder Alkoxyalkylreste, Halogenatome oder andere funktionelle Gruppen tragen kann,
oder eine Hydroxygruppe oder eine C₁-C₂₀-Alkoxyalkylgruppe, die an einem oder mehreren Kohlenstoffatomen an beliebiger Position durch eine oder mehrere Hydroxygruppen substituiert ist, bezeichnet und
- n: 0, 1 oder 2,
- z: 1 bis 20, besonders bevorzugt 1 bis 8, insbesondere 3 ist.

Besonders geeignet sind 3-Chlorpropyltriethoxysilan, 3-Chlorpropyltrimethoxysilan, 3-Chlorpropyldiethoxymethylsilan, 2-Chlorethyltriethoxysilan, 3-(N-Phenylamino)-propyltrimethoxysilan, 3-(N-(4-Methylphenyl)-aminopropyltriethoxysilan, 3-Hydroxypropyltriethoxysilan, 3-(2-Hydroxyethoxy)propyltriethoxysilan.

Die erfindungsgemäßen Haftvermittler werden in Mengen von 0,01 bis 10 Gew.-%, vorzugsweise 0,1 bis 6 Gew.-%, bezogen auf die Menge des Polyorganosiloxans (Komponente a) eingesetzt.

Die erfindungsgemäßen Massen können, wie bei 1K-RTV-Massen üblich, in Planetenmischern, Butterfly-Mischern, Dissolvern, kontinuierlich arbeitenden Mischschnecken oder anderen, für die Pastenherstellung geeigneten Geräten hergestellt werden. Die Massen müssen während der Herstellung und Lagerung vor Luftfeuchtigkeit geschützt werden. Die Mischreihenfolge der einzelnen Komponenten kann beliebig gewählt werden.

Durch die folgenden Beispiele soll die Erfindung näher erläutert werden.

### Beispiele 1 bis 7

In einem Planetenmischer wurden 55,0 Gew.-Teile eines Polydimethylsiloxans mit -OSi(OCH₃)₂(CH₃)-Endgruppen, das eine Viskosität von 50 Pa.s bei 25°C besaß, mit 29,0 Gew.-Teilen eines Polydimethylsiloxans mit -OSi(CH₃)₃-Endgruppen (Viskosität 0,1 Pa.s bei 25°C) und 2,5 Gew.-Teilen Methyltrimethoxysilan vermischt. Danach wurden 9,5 Gew.-Teile einer hydrophoben pyrogenen Kieselsäure eingemischt. Anschließend wurde der Titankatalysator und der entsprechende Haftvermittler zugesetzt (siehe Tabelle 1).

Zur Überprüfung der mechanischen Daten werden 2 mm dicke Felle auf einer glatten, ebenen Unterlage ausgezogen und nach 14-tägiger Aushartung bei 25°C und 50 % relativer Luftfeuchtigkeit nach DIN 53504 (Normstab) geprüft. Als weiteres werden bei den vulkanisierten Elastomeren die Shore A Härten nach 21 Tagen entsprechend DIN 53505 ermittelt. Die Hautbildungszeit der Massen wird bestimmt, d.h. die Zeit, die verstreicht bis sich auf der Oberfläche der Probenfelle eine Haut bildet. Die Haftung wird so beurteilt, daß auf Prüfplatten der verschiedenen Substrate die 1K-RTV-Massen in Form eines Stranges der Größe von ca. 50x50x10 mm ausgezogen werden und nach 7-tägiger Aushärtezeit durch kräftiges Ziehen an dem vulkanisierten Material geprüft wird, ob Haftung zu dem entsprechenden Untergrund besteht. Nach bestandener Prüfung werden die Prüflinge weitere 7 Tage in Wasser bei Raumtemperatur gelagert und erneut auf Haftung geprüft.

### Beispiel 8

Es wurden 55,0 Gew.-Teile eines Polydimethylsiloxans mit -OSi(OCH₃)₂[(CH₂)₃Cl]-Endgruppen, das eine Viskosität von 80 Pa.s bei 25°C besaß, mit 29,0 Gew.-Teilen eines Polydimethylsiloxans mit -OSi(CH₃)₃-Endgruppen (Viskosität 1,0 Pa.s bei 25°C) und 2,5 Gew.-Teilen Methyltrimethoxysilan in einem Planetenmischer vermischt. Danach wurden 9,5 Gew.-Teile einer hydrophoben pyrogenen Kieselsäure eingemischt. Anschließend wurde entsprechend Tabelle 1 der Titankatalysator und Haftvermittler zugesetzt.

### Beispiel 9 bis 15

In einem Planetenmischer wurden 35,0 Gew.-Teile eines Polydimethylsiloxans mit OSi(CH₃)₂OH-Endgruppen, das eine Viskosität von 80 Pa.s bei 25°C besaß, mit 22,0 Gew.-Teilen eines Polydimethylsiloxans mit -OSi(CH₃)₃-Endgruppen (Viskosität 0,01 Pa.s bei 25°C) und mit 30,0 Gew.-Teilen eines mit Stearinsäure behandelten Kreidefüllers vermischt. Danach wurde der Titankatalysator (siehe Tabelle 2) eingemischt. Durch Einmischen von 2,5 Gew.-Teilen Methyltrimethoxysilan und 5,5 Gew.-Teilen einer hydrophilen pyrogenen Kieselsäure sowie der entsprechend Tabelle 2 aufgeführten Menge an Haftvermittler wurde der Ansatz vervollständigt.

**Tabelle 1**

| **Beispiel Nr.** | 1.* | 2. | 3. | 4.* | 5. | 6. | 7. | 8 |
|---|---|---|---|---|---|---|---|---|
| Titankatalysator | A | A | A | B | B | B | C | A |
| Gewichtsteile | 1,0 | 1,0 | 1,0 | 0,9 | 0,9 | 0,9 | 1,0 | 1,0 |
| Haftmittel | - | D | E | - | D | E | F | D |
| Gewichtsteile | | 1,0 | 1,0 | | 1,0 | 1,0 | 0,3 | 0,5 |
| **Hautbildungszeit** (Minuten) | 10 | 10 | 12 | 5 | 15 | 12 | - | 17 |
| **Härte Shore A** nach 21 Tagen | 19 | 21 | 20 | 16 | 19 | 18 | 20 | 19 |

| **Normstab DIN 53504** | | | | | | | | |
|---|---|---|---|---|---|---|---|---|
| Reißfesstig. (N/mm²) | 1,56 | 1,60 | 1,78 | 1,75 | 1,70 | 1,68 | 1,50 | 1,77 |
| Dehnung(%) | 541 | 482 | 598 | 586 | 536 | 521 | 520 | 643 |
| E-Modul (N/mm²) | 0,36 | 0,35 | 0,39 | 0,31 | 0,35 | 0,32 | 0,38 | 0,35 |

| **Haftung** | | | | | | | | |
|---|---|---|---|---|---|---|---|---|
| Glas | 2 | 2 | 2 | 1 | 2 | 2 | 2 | 2 |
| Kachel | 2 | 2 | 2 | 1 | 2 | 2 | 2 | 2 |
| Aluminium | 0 | 2 | 2 | 0 | 2 | 2 | 2 | 2 |
| V₄A-Stahl | - | - | - | - | - | - | 2 | - |
| Kupfer | 0 | 2 | 2 | 0 | 2 | 2 | 2 | 2 |
| PVC | 0 | 2 | 2 | 0 | 1 | 2 | 2 | 2 |
| Plexiglas | 1 | 2 | 2 | 0 | 2 | 2 | 2 | 2 |
| Macrolon | 0 | 2 | 2 | 1 | 2 | 2 | 2 | 2 |

| | | | | | | | | |
|---|---|---|---|---|---|---|---|---|
| * Vergleichsbeispiel | | | | | | | | |
| A = Propan-1,2-dioxodiacetessigsäureethylestertitanat B = Tetraisobutyltitanat C = Diisobutylbisacetessigsäureethylestertitanat D = 3-Chlorpropyltriethoxysilan E = 3-Chlorpropyltrimethoxysilan F = 3-(N-Phenylamino)-propyltrimethoxysilan Haftung: 0 = keine Haftung nach 7 Tagen Aushärtung 1 = Haftung nach 7 Tagen Aushärtung 2 = Haftung nach 7 Tagen Aushärtung und nach 7 Tagen in Wasser bei RT | | | | | | | | |

**Tabelle 2**

| **Beispiel Nr.** | 9.* | 10. | 11.* | 12. | 13. | 14.* | 15. |
|---|---|---|---|---|---|---|---|
| Titankatalysator | C | C | A | A | A | G | G |
| Gewichtsteile | 1,0 | 1,0 | 1,0 | 1,0 | 1,0 | 1,5 | 1,5 |
| Haftmittel | - | F | - | D | C | - | D |
| Gewichtsteile | | 0,5 | | 1,0 | 0,5 | | 1,0 |
| **Hautbildungszeit** | - | - | 10 | 12 | 11 | 9 | 11 |
| (Minuten) | | | | | | | |
| **Härte Shore A** | 27 | 29 | 28 | 30 | 28 | 27 | 29 |
| nach 21 Tagen | | | | | | | |

| **Normstab DIN 53504** | | | | | | | |
|---|---|---|---|---|---|---|---|
| Reißfesstig. (N/mm²) | 1,43 | 1,46 | 1,50 | 1,49 | 1,51 | 1,39 | 1,43 |
| Dehnung (%) | 424 | 450 | 463 | 475 | 465 | 421 | 420 |
| E-Modul (N/mm²) | 0,46 | 0,45 | 0,45 | 0,44 | 0,43 | 0,46 | 0,45 |

| **Haftung/Raupentest** | | | | | | | |
|---|---|---|---|---|---|---|---|
| Glas | 2 | 2 | 2 | 2 | 2 | 2 | 2 |
| Kachel | 2 | 2 | 2 | 2 | 2 | 2 | 2 |
| Aluminium | 2 | 2 | 1 | 2 | 2 | 1 | 2 |
| V₄A-Stahl | 2 | 2 | 0 | 2 | 1 | - | - |
| Kupfer | 0 | 2 | 1 | 2 | 2 | 0 | 2 |
| PVC | 0 | 2 | 0 | 2 | 2 | 0 | 2 |
| Plexiglas | 0 | 2 | 0 | 2 | 2 | 0 | 2 |
| Macrolon | 0 | 2 | 1 | 2 | 2 | 0 | 2 |

| | | | | | | | |
|---|---|---|---|---|---|---|---|
| * Vergleichsbeispiel | | | | | | | |
| A = Propan-1,2-dioxodiacetessigsäureethylestertitanat C = Diisobutylbisacetessigsäureethylestertitanat D = 3-Chlorpropyltriethoxysilan F = 3-(N-Phenylamino)-propyltrimethoxysilan G = Propan-1,2-dioxo-acetessigsäureethylester-citronensäure-triethylestertitanat Haftung: 0 = keine Haftung nach 7 Tagen Aushärtung 1 = Haftung nach 7 Tagen Aushärtung 2 = Haftung nach 7 Tagen Aushärtung und nach 7 Tagen in Wasser bei RT | | | | | | | |

## Patentansprüche

1. Bei Umgebungstemperatur unter Einfluß von Wasser bzw. Feuchtigkeit zu Elastomeren härtende Polyorganosiloxanmassen, die unter Ausschluß von Wasser lagerfähig sind und durch Mischen von
a) Polyorganosiloxanen mit reaktiven Endgruppen mit einer Viskosität von 1,0 bis 1000 Pa.s bei 25°C, die als organische Gruppen Methyl-, Ethyl-, Phenyl-, Vinyl- oder weitere beliebige lineare oder verzweigtkettige C₂-C₈-Alkyl oder Haloalkylreste, bzw. Gemische daraus enthalten,
b) Silanvernetzern der allgemeinen Formel R¹₄₋ₙSi(OR²)ₙ, wobei R¹ und R² gleiche oder verschiedene einwertige, gegebenenfalls substituierte Kohlenwasserstoffreste mit C₂-C₈-Kohlenstoffatomen je Rest bedeuten und n eine ganze Zahl mit dem Wert 2, 3 oder 4 darstellt,
c) Titanverbindungen als Kondensationskatalysatoren,
d) gegebenenfalls Füllstoffen,
e) einem Haftvermittler, der durch die allgemeine Formel
(R³O)₃₋ₙR⁴ₙSi-(CH₂)_{z}-X
wobei
R³, R⁴ gleiche oder verschiedene lineare oder verzweigte C₁-C₂₀-Alkylreste oder Alkoxyalkylreste bezeichnet,
X ein Halogenatom,
einen Aminoarylrest bezeichnet, wobei der aromatische Rest gegebenenfalls an einem oder mehreren Kohlenstoffatomen an beliebiger Position C₁-C₂₀-Alkylreste oder Alkoxyalkylreste, Halogenatome oder andere funktionelle Gruppen tragen kann,
oder eine Hydroxygruppe oder eine C₁-C₂₀-Alkoxyalkylgruppe, die an einem oder mehreren Kohlenstoffatomen an beliebiger Position durch eine oder mehrere Hydroxygruppen substituiert ist,
n = 0, 1 oder 2,
z = 1 bis 20, besonders bevorzugt 1 bis 8, insbesondere 3
und gegebenenfalls weiteren Zusatz- und Hilfsstoffen wie z.B. Stabilisatoren, Farbstoffen und Fungiziden hergestellt werden.

2. Massen gemäß Anspruch 1, dadurch gekennzeichnet, daß als Haftmittel (e) 3-Chlorpropyltriethoxysilan und 3-Chlorpropyltrimethoxysilan bzw. Gemische aus diesen, wobei die Verhältnisse der beiden Verbindungen zueinander beliebig sein können, verwendet werden.

3. Massen gemäß Anspruch 1, dadurch gekennzeichnet, daß als Haftmittel (e) 3-(N-Phenylamino)-propyltrimethoxysilan und 3-(N-(4-Methylphenyl)-aminopropyltriethoxysilan bzw. Gemische aus diesen, wobei die Verhältnisse der beiden Verbindungen zueinander beliebig sein können, verwendet werden.

4. Massen gemäß Anspruch 1, dadurch gekennzeichnet, daß als Haftmittel (e) 3-Hydroxypropyltrimethoxysilan verwendet wird.

5. Massen gemäß Anspruch 1 und 4, dadurch gekennzeichnet, daß die erfindungsgemäßen Haftmittel in Mengen von 0,01 bis 10 Gew.-%, vorzugsweise 0,1 bis 6 Gew.-%, bezogen auf die Menge des Polyorganosiloxans (a) eingesetzt werden.

6. Massen gemäß Anspruch 1 und 5, dadurch gekennzeichnet, daß als Alkoxysilanvernetzer Methyltrimethoxysilan, Vinyltriethoxysilan, Methyltriethoxysilan oder Tetraethoxysilan bzw. Gemische aus diesen, wobei die Verhältnisse der einzelnen Komponenten zueinander beliebig sein können, verwendet werden.

7. Massen gemäß Anspruch 1 bis 6, dadurch gekennzeichnet, daß als Alkoxysilanvernetzer Teilhydrolysate aus Methyltrimethoxysilan, Vinyltriethoxysilan, Methyltriethoxysilan oder Tetraethoxysilan, wobei die Anzahl der Siliciumatome pro Molekül 2 bis 12 betragen kann, bzw. Gemische, wobei die Verhältnisse der einzelnen Komponenten zueinander beliebig sein können, verwendet werden.

8. Massen gemaß Anspruch 1 bis 7, dadurch gekennzeichnet, daß als Polyorganosiloxane (a) solche mit Hydroxydimethyl-, Methyldimethoxy-, Vinyldiethoxy-, Triethoxysiloxy- oder 3-Chlorpropyl-dimethoxysiloxy-Endgruppen eingesetzt werden.

9. Verwendung von Verbindungen der allgemeinen Formel
(R³O)₃₋ₙR⁴ₙSi-(CH₂)_{z}-X
wobei
R³, R⁴ gleiche oder verschiedene lineare oder verzweigte C₁-C₂₀-Alkylreste oder Alkoxyalkylreste bezeichnet,
X ein Halogenatom,
einen Aminoarylrest bezeichnet, wobei der aromatische Rest gegebenenfalls an einem oder mehreren Kohlenstoffatomen an beliebiger Position C₁-C₂₀-Alkylreste oder Alkoxyalkylreste, Halogenatome oder andere funktionelle Gruppen tragen kann,
oder eine Hydroxygruppe oder eine C₁-C₂₀-Alkoxyalkylgruppe, die an einem oder mehreren Kohlenstoffatomen an beliebiger Position durch eine oder mehrere Hydroxygruppen substituiert ist,
n = 0, 1 oder 2, und
z = eine Zahl zwischen 1 und 20 ist,
als Haftvermittler in 1K-RTV-Massen, die Titanverbindungn als Kondensationskatalysatoren aufweisen.
